(19) Europäisches Patentamt
European Patent Office
Office européen des brevets

(11)  **EP 1 779 488 B1**

(12)  **EUROPÄISCHE PATENTSCHRIFT**

(45) Veröffentlichungstag und Bekanntmachung des Hinweises auf die Patenterteilung:
**08.06.2011   Patentblatt 2011/23**

(21) Anmeldenummer: 05773769.4

(22) Anmeldetag: **08.08.2005**

(51) Int Cl.:
*H02H 9/00* *(2006.01)*     *H02J 3/01* *(2006.01)*

(86) Internationale Anmeldenummer:
**PCT/DE2005/001401**

(87) Internationale Veröffentlichungsnummer:
**WO 2006/018007 (23.02.2006 Gazette 2006/08)**

(54) **NETZFILTER**

NETWORK FILTER

FILTRE DE RESEAU

(84) Benannte Vertragsstaaten:
**AT DE FR GB**

(30) Priorität: **16.08.2004   DE 102004039694**

(43) Veröffentlichungstag der Anmeldung:
**02.05.2007   Patentblatt 2007/18**

(73) Patentinhaber: **EPCOS AG**
**81669 München (DE)**

(72) Erfinder:
 • **BEIL, Kurt**
**92331 Parsberg (DE)**

 • **PAULWITZ, Christian**
**93152 Nittendorf (DE)**

(74) Vertreter: **Epping - Hermann - Fischer**
**Patentanwaltsgesellschaft mbH**
**Ridlerstrasse 55**
**80339 München (DE)**

(56) Entgegenhaltungen:
**EP-A- 0 684 679     EP-A- 1 069 673**
**DE-A1- 19 915 849     US-A- 6 075 425**

**Beschreibung**

Es wird ein Netzfilter angegeben.

Aus der Druckschrift EP 1 069 673 A1 ist ein Netzeingangsfilter bekannt, welcher eine stromkompensierte Drossel und ein Kapazitätsnetzwerk aufweist.

Eine zu lösende Aufgabe besteht darin, ein Netzfilter anzugeben, das mit einer FI-Einrichtung verträglich ist.

Die hier beschriebenen Netzfilter werden dort angewendet, wo Störspannungen ausgeglichen werden müssen um eine Last mit einer geeigneten Spannung zu versorgen. Sie weisen mehrere Eingänge und Ausgänge auf, welche jeweils unterschiedliche Signale bzw. Signalanteile empfangen und senden.

Es wird ein Netzfilter mit einer Filtereinheit vorgeschlagen, welche einen Eingang und einen Ausgang sowie eine stromkompensierte Drossel und ein Kapazitätsnetzwerk aufweist, wobei die Drossel mehrere Phasenwicklungen auf einem gemeinsamen Kern aufweist, jede Phasenwicklung in Reihe mit einem Phasenleiter geschaltet ist, das Kapazitätsnetzwerk mehrere Kondensatoren aufweist, welche jeweils zwischen einem Phasenleiter und einem Neutralleiter geschaltet sind und eine weitere Drossel in Reihe zu dem Neutralleiter vorgesehen ist, welche getrennt vom Kern gewickelt ist.

Der Filter enthält eine Nullleiterklemme, die dazu vorgesehen ist, mit dem Neutralleiter eines Versorgungsnetzes elektrisch verbunden zu sein. Eine zusätzliche, vierte Spule verbindet diese Klemme mit dem Sternpunkt des Kapazitätsnetzwerkes, so dass Spannungen, die wegen asymmetrischer Störungen am Sternpunkt vorhanden sein können, kurzgeschlossen werden.

Dabei werden vorteilhafterweise die Induktivitäten im Neutralleiter nicht durch eine weitere Wicklung auf die stromkompensierte Drossel umgesetzt, sondern durch eine separate Drossel bzw. Wicklung. Dies ist möglich, da kein nennenswerter Betriebsstrom über den Neutralleiter fließt, sondern nur hochfrequente Anteile, da der Neutralleiter lastseitig vorzugsweise nicht beschaltet wird.

Die Separate Ausführung der Nulleiterdrossel von der Hauptdrossel ist dabei besonders vorteilhaft, da sich der Kern der Hauptdrossel geometrisch vollständig für die drei Phasenwicklungen nutzen lässt und dabei bei gegebener Kerngeometrie eine größtmögliche Hauptinduktivität erzielt werden kann. Darüber hinaus ist durch die geometrische Trennung der Nulleiterdrossel von der Hauptdrossel in der Regel auch eine bessere Dämpfung hochfrequenter Störspannungen und -ströme erreichbar.

Vorteilhafterweise kann der Neutralleiter an die Eingangsseite der Filtereinheit herangeführt werden, jedoch ohne einen Neutralleiteranschluss am Ausgang der Filtereinheit vorzusehen. Somit ist es möglich, den für beispielsweise ein übliches 3-Leiter-Filter, - welches mit relativ großen Kondensatoren gegen Erde ausgestattet und daher nicht verträglich mit einer Fehlerstromschutzeinrichtung ist -, notwendigen Aufwand nicht wesentlich zu erhöhen, damit eine für die gleiche Funkentstörwirkung notwendige Verträglichkeit mit einer Fehlerstromschutzeinrichtung sichergestellt werden kann.

Der Neutralleiter wird dazu benutzt, den durch das Netzfilter, beispielsweise Funkentstörfilter, verursachten Ableitstrom im wesentlichen nicht über einen Schutzleiter, sondern über den Neutralleiter fließen zu lassen, damit der Fehlerstrom reduziert werden kann.

Der Bauelementaufwand ist für ein Funkentstörfilter bei gleicher Filterwirkung nur geringfügig höher als bei einem entsprechenden nicht mit einer Fehlerstromschutzeinrichtung verträglichen Drei-Leiter-Filter, aber deutlich geringer als bei einem Vierleiterfilter (gekennzeichnet durch einen Nulleiteranschluß auch an der Lastseite des Filters).

Netzfilter werden anhand der folgenden Ausführungsbeispiele und Figuren näher erläutert.

Dabei zeigt

Figur 1    ein Netzfilter mit einer Filtereinheit, welche eine vierte, von einer Drossel getrennt gewickelte Induktivität aufweist,

Figur 2    ein Netzfilter mit zwei hintereinander geschalteten Filtereinheiten, welche jeweils von einer Drossel getrennt gewickelte Induktivitäten aufweisen,

Figur 3    ein Netzfilter nach Figur 2, bei dem eine der Filtereinheiten keine von einer Drossel getrennt gewickelte Induktivität aufweist,

Figur 4    ein Netzfilter nach Figur 3, bei dem eine Neutralleitung nicht mit der Filtereinheit vorgeschalteten Schaltungselementen verbunden ist,

Figur 5    ein Netzfilter nach Figur 2, bei dem eine Neutralleitung nicht mit der Filtereinheit vorgeschalteten Schaltungselementen verbunden ist.

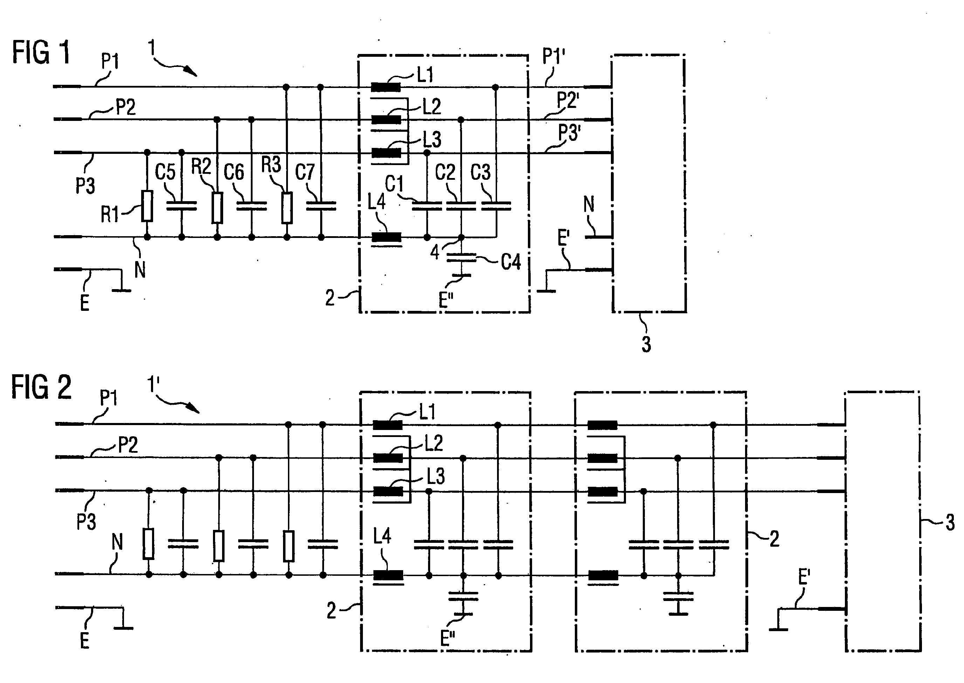

In Figur 1 ist gezeigt, wie ein Netzfilter 1 eingangsseitig mit Phasenleiter P1 bis P3, einem Neutralleiter N und einer Erdleitung E ausgebildet ist, wobei die Leiter, mit Ausnahme der Erdleitung E, in eine Filtereinheit 2 münden, welche mit einer stromkompensierenden Drossel ausgestattet ist. Die Drossel umfasst vorzugsweise 3 Phasenwicklungen bzw. Induktivitäten L1 bis L3, welche um einen gemeinsamen Kern gewickelt sind.

Es ist eine weitere Drossel bzw. Induktivität L4 vorgesehen, welche vom genannten Kern separat ausgeführt und mit dem Neutralleiter N verbunden bzw. Teil des Neutralleiters ist.

Die Filtereinheit 2 ist ausgangsseitig mit Phasenleitungen P1' bis P3' verbunden, welche vorzugsweise an eine Last 3 angeschlossen sind. Die Last 3 kann beispielsweise ein Umrichter, eine Drehfeldmaschine oder ein Akku- oder Netzladegerät und die Phasenleitungen als Kabel realisiert sein. Die Last 3 wird zudem in der Regel mit einer Erdleitung E' versehen.

Die Filtereinheit 2 wird vorzugsweise mit einer Anordnung von 3 Kondensatoren C1 bis C3 versehen, welche jeweils mit einer der Phasenleitungen P1' bis P3' verbunden sind. Die Phasenleitungen P1' bis P3' bilden die Teile der Phasenleitungen P1 bis P3, welche den Induktivitäten L1 bis L3 nachgeschaltet in Richtung der Last 3 verlaufen. Die Anordnung von Kondensatoren C1 bis C3 kann als sternförmiges Kapazitätsnetzwerk verstanden werden. Verbunden mit diesem Kapazitätsnetzwerk und einer Erdleitung E" der Filtereinheit 2 ist ein weiterer Kondensator C4, welcher vorzugsweise am Sternpunkt 4 der sternförmigen Anordnung von Kondensatoren angeschlossen ist.

Die Induktivität L4 am Neutralleiter N muss nicht auf den Bemessungsstrom des Netzfilters 1 ausgelegt sein, d.h. nicht auf den Phasenleitungen P1 bis P3 bzw. P1' bis P3', da nur Stromanteile über den Neutralleiter fließen, die kapazitiv verursacht werden. Dies kann dadurch sichergestellt werden, dass kein Anschluss des Neutralleiters am Ausgang der Filtereinheit vorgesehen werden muss.

In einer Variante kann die Last 3 selbst eine Filtereinheit 2 in der genannten Form enthalten, damit sie ohne Weiteres an eine Stromversorgung angeschlossen werden kann. Alternativ wird eine Filtereinheit 2 der genannten Art direkt in einer Stromversorgung integriert.

Die in den Schaltungsbeispielen angegebenen Widerstände R1 bis R3 werden üblicherweise aus Sicherheitsgründen zur Entladung der Kondensatoren nach Abschalten der Netzspannung benötigt und haben keinen Einfluß auf die beschriebenen Funktionen der Filterschaltung.

In einem Versuch wurde ein Netzfilter mit den folgenden elektrischen Werten aufgebaut:

$$L1 = L2 = L3 = 3,9 \text{ mH}$$

$$C1 = C2 = C3 = C4 = C5 = C6 = C7 = 2,2 \ \mu F$$

$$L4 = 3,3 \text{ mH}$$

Betriebsart: Frequenzumrichter mit Motor 2,2 kW; Last 46 Hz/4,2 A; Schaltfrequenz 4 KHz; geschirmte Motorleitung.

In einer Masseleitung war ein Fehlerstromschutzschalter der Empfindlichkeit 30 mA entfalten.

Beim Betrieb der oben genannten Anordnung konnte erreicht werden, dass eine vergleichbare Filterwirkung gegenüber Störspannungen wie bei einem 3-Leiter-Filter ohne Neutralleiter erzielt werden konnte, der Fehlerstromschutzschalter jedoch nicht auslöste.

In einem weiteren Versuch wurde für die Induktivitäten folgende Werte gewählt:

$$L1 = L2 = L3 = 1,2 \text{ mH}$$

$$L4 = 800 \ \mu H \text{ (entspricht einer einzigen Wicklung)}$$

Auch hier wurde ein entsprechendes Ergebnis erzielt.

Figur 2 zeigt einen Netzfilter 1', welcher mit zwei hintereinander geschalteten bzw. kaskadierten und in gleicher oder zumindest ähnlicher Art ausgebildeten Filtereinheiten 2 ausgebildet ist. Dabei sind im Netzfilter beliebig viele Kaskadierungen von Filtereinheiten 2, auch mit Varianten der Filtereinheiten enthaltend alternative Schaltungselemente, möglich. Die Filtereinheiten teilen vorzugsweise gemeinsame Phasenleiter P1 bis P3 bzw. P1' bis P3' sowie einen gemeinsamen Neutralleiter N, welcher mit den Kondensatoren und den separat gewickelten Induktivitäten verbunden ist. Der Neutralleiter ist hier auch mit den der Filtereinheiten vorgeschalteten Widerständen und Kondensatoren verbunden.

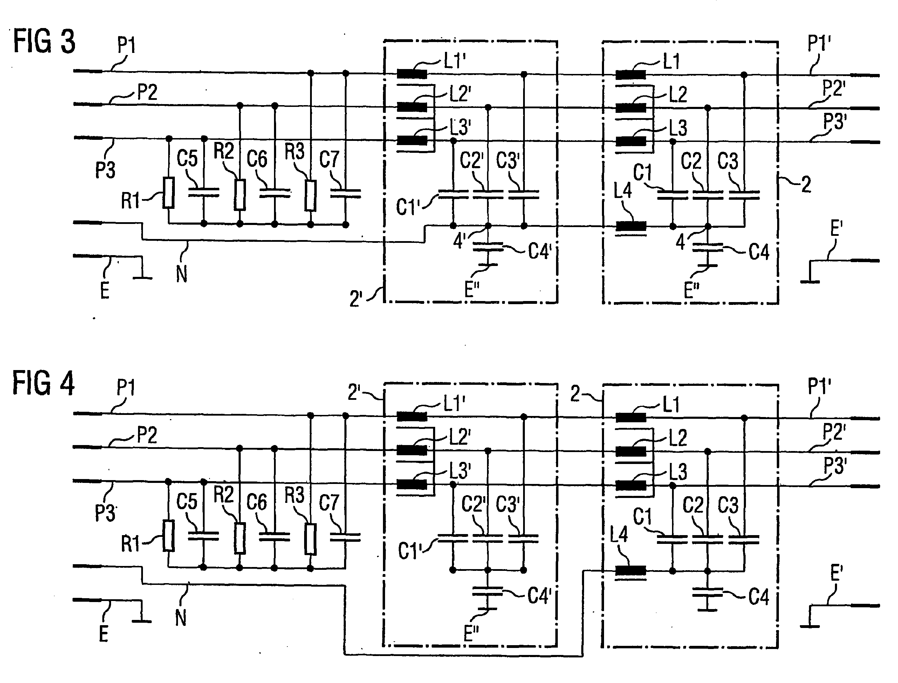

Figur 3 zeigt im Unterschied zu Figur 2 zwei hintereinander geschaltete, voneinander verschiedene Filtereinheiten 2 und 2', wobei bei der einen Filtereinheit 2' die zusätzliche Induktivität L4 auf dem Neutralleiter N fehlt.

Bei der Anordnung gemäß Figur 3 sind zwei verschiedene Filtereinheiten 2 und 2' vorgesehen. Die erste Filtereinheit 2 ist gebildet wie die Filtereinheit 2 aus Figur 1, wobei sich jedoch die elektrischen Kenndaten der Induktivitäten L1 bis L3 sowie L4 und die Kenndaten der Kondensatoren C1 bis C4 unterscheiden können. Zusätzlich ist in einer Reihenschaltung zur Filtereinheit 2 noch eine weitere Filtereinheit 2' vorgesehen, die in vielen Merkmalen mit der Filtereinheit 2 übereinstimmt, bei der jedoch die zusätzliche Induktivität L4 in der Neutralleitung N fehlt.

Verschaltet sind die Filtereinheiten 2 und 2' dergestalt, dass im Anschluss an das Netzwerk aus Widerständen R1, R2, R3 und Kondensatoren C5, C6, C7 die erste Filtereinheit 2' so geschaltet ist, dass jeweils eine der Induktivitäten L1', L2', L3' in jeweils eine der Phasenleitungen P1, P2 und P3 geschaltet wird. Anschließend sind die Kondensatoren C1', C2', C3' vorgesehen, die analog zu Figur 1 so geschaltet sind, dass jeweils einer der Kondensatoren mit einer Phasenleitung verbunden ist und diese Phasenleitung mit der Neutralleitung N verbindet. Der Kondensator C4' ist vorzugsweise mit dem Sternpunkt der anderen drei Kondensatoren C1', C2', C3' verbunden und verbindet diesen wiederum mit der Erdleitung E2', die auch aus Teilen des Filtergehäuses bestehen kann.

Der ersten Filtereinheit 2' nachgeschaltet ist eine zweite Filtereinheit 2 vorgesehen, wobei die Induktivitäten L1, L2, L3 entsprechend der Filtereinheit 2' wiederum in die Phasenleitungen geschaltet sind. Zusätzlich zur Filtereinheit 2' ist noch eine weitere Phasenwicklung L4 vorgesehen, die in der Neutralleitung N liegt und diese mit dem Sternpunkt 4 der Filtereinheit 2 verbindet.

In einem Versuch wurde eine Anordnung gemäß Figur 3 aufgebaut, wobei für die Filtereinheit 2' folgende elektrische Kenngrößen gewählt wurden:

$$L1' = L2' = L3' = 1,7 \text{ mH}$$

$$C1' = C2' = C3' = 1 \ \mu F$$

$$C4' = 100 \text{ nF}$$

Für die Kennzahlen der Filtereinheit 2 wurden folgende Werte verwendet:

$$L1 = L2 = L3 = 1,7 \text{ mH}$$

$$C1 = C2 = C3 = 2,2 \ \mu F = C4$$

$$L4 = 1,6 \text{ mH (mit zwei Wicklungen in Reihe)}$$

Auch mit dieser Versuchsanordnung konnte ein Auslösen des FI-Schalters (bei ansonsten gleichen Versuchsbedingungen wie bereits oben beschrieben) verhindert werden.

Figur 4 zeigt im Unterschied zu Figur 3 einen Neutralleiter N, welcher nicht mit den Schaltungselementen der Filtereinheit 2', welche keine separat gewickelte Induktivität aufweist, verbunden ist. Ebenfalls ist der Neutralleiter nicht mit den der Filtereinheiten 2 und 2' vorgeschalteten Schaltungselementen R1 bis R3 und C4 bis C6 verbunden.

Der Neutralleiter N ist lediglich über die Induktivität L4 mit den Kondensatoren C1, C2, C3, C4 der lastseitigen Filtereinheit 2 verbunden.

In einem Ausführungsbeispiel kommen folgende elektrische Kenngrößen für die Filteranordnung gemäß Figur 4 in Betracht:

$$L1' = L2' = L3' = 1,7 \text{ mH}$$

$$C1' = C2' = C3' = 1 \ \mu F$$

$$C4' = 100 \text{ nF}$$

$$L1 = L2 = L3 = 1,7 \text{ mH}$$

$$C1 = C2 = C3 = C4 = 2,2 \ \mu F$$

$$L4 = 1,6 \text{ mH (mit zwei Wicklungen in Reihe)}$$

Vorzugsweise sind bei einer kaskadierten bzw. Reihenschaltung von mehreren Filtereinheiten die Induktivitäten, die in den Phasenleitungen liegen, bezüglich ihrer elektrischen Kennzahl gleich groß (d.h. L1 = L1'= L2 = L2' = L3 = L3'). Es können aber auch unterschiedliche Induktivitätswerte (L1 = L2 = L3 ≠ L1' = L2' = L3') eingesetzt werden. Die mit der Erdleitung verbundenen Kondensatoren werden vorzugsweise so ausgewählt, dass die lastnahen Kondensatoren eine größere Kapazität haben, als die lastfernen Kondensatoren.

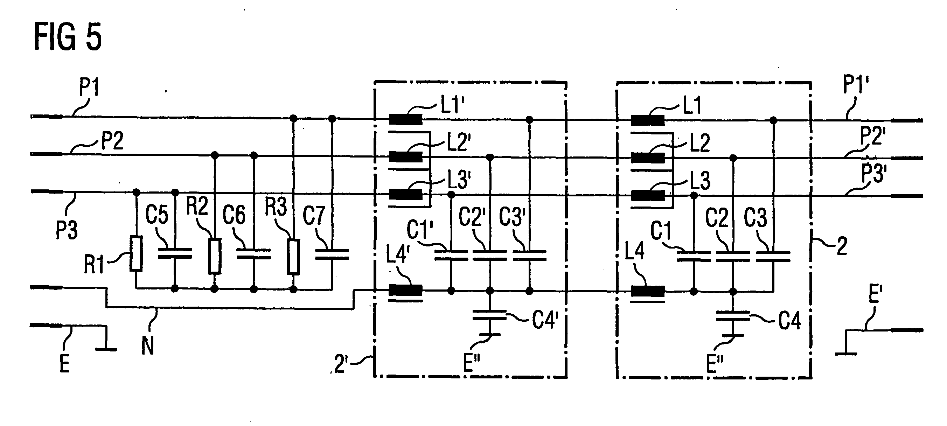

Figur 5 zeigt im Unterschied zu Figur 2 eine Ausführungsform der Erfindung, bei der der Neutralleiter N zwar mit den Induktivitäten L4 und L4' der Filtereinheiten 2 und 2' verbunden ist, nicht jedoch mit den der Filtereinheiten vorgeschalteten Schaltungselementen R1 bis R3 und C4 bis C6.

Bei der Ausführungsform gemäß Figur 5 kann gemäß einem Test die folgende Auswahl von elektrischen Kenngrößen verwendet werden:

$$L1' = L2' = L3' = 1,7 \text{ mH}$$

$$C1' = C2' = C3' = 1 \ \mu F$$

$$C4' = 100 \text{ nF}$$

$$L1 = L2 = L3 = 1,7 \text{ mH}$$

$$C1 = C2 = C3 = C4 = 2,2 \ \mu F$$

$$L4 = L4' = 1,6 \text{ mH}$$

Die Induktivitäten L4 und L4' werden erreicht in Form von zwei Drosseln in Reihe, wobei zwischen den Drosseln die Kondensatoren C1' bis C4' angebunden werden.

Bezugszeichenliste

| | |
|---|---|
| 1 | Netzfilter |
| 1' | Alternatives Netzfilter |
| 2, 2' | Filtereinheit |
| 3 | Last |

| | |
|---|---|
| P1 | Erste Phasenleitung |
| P2 | Zweite Phasenleitung |
| P3 | Dritte Phasenleitung |

| | |
|---|---|
| N | Neutralleitung |

| | |
|---|---|
| E | Erste Erdleitung |
| E' | Zweite Erdleitung |
| E " | Dritte Erdleitung |

| | |
|---|---|
| L1 | Erste Phasenwicklung |
| L2 | Zweite Phasenwicklung |
| L3 | Dritte Phasenwicklung |
| L4 | Vierte Phasenwicklung |

| | |
|---|---|
| C1 | Erster Kondensator |
| C2 | Zweiter Kondensator |
| C3 | Dritter Kondensator |
| C4 | Vierter Kondensator |
| C5 | Fünfter Kondensator |
| C6 | Sechster Kondensator |
| C7 | Siebter Kondensator |

**Patentansprüche**

1. Netzfilter (1) mit einer Filtereinheit (2), welche einen Eingang und einen Ausgang sowie eine stromkompensierte Drossel und ein Kapazitätsnetzwerk aufweist, wobei

- die Drossel mehrere Phasenwicklungen (L1, L2, L3) auf einem gemeinsamen Kern aufweist,
- jede Phasenwicklung in einen Phasenleiter (P1, P2, P3) geschaltet ist,
- das Kapazitätsnetzwerk Kondensatoren (C1, C2, C3, C4) aufweist, welche jeweils zwischen einem Phasenleiter (P1, P2, P3) und einem Neutralleiter geschaltet sind,

**dadurch gekennzeichnet, dass**
eine weitere Drossel in Reihe zu dem Neutralleiter (N) vorgesehen ist, welche getrennt von Kern gewickelt ist.

2. Netzfilter nach Anspruch 1, bei dem ein weiterer Kondensator (C4) zwischen dem Neutralleiter (N) und einer Bezugserde geschaltet ist.

3. Netzfilter nach Anspruch 1, bei dem das Netzfilter (1) mehrere hintereinander geschaltete Filtereinheiten (2, 2') der gleichen Art aufweist.

**4.** Netzfilter nach Anspruch 3, bei dem die Filtereinheiten (2, 2') einen gemeinsamen Neutralleiter (N) aufweisen.

**5.** Netzfilter nach einem der Ansprüchen 3 oder 4, bei dem nur eine der Filtereinheiten (2) eine von der Hauptdrossel getrennte Induktivität (L4) aufweist.

**6.** Netzfilter nach einem der vorhergehenden Ansprüche, bei dem der Filtereinheit (2) Schaltungselemente (C4, C5, C6) an den Phasenleitern (P1, P2, P3) vorgeschaltet sind.

**7.** Netzfilter nach Anspruch 6, bei dem die Schaltungselemente (C4, C5, C6) Kondensatoren sind.

**8.** Netzfilter nach einem der Ansprüche 6 oder 7, bei dem der Neutralleiter (N) mit den vorgeschalteten Schaltungselementen verbunden ist.

**Claims**

**1.** Line filter (1) having a filter unit (2) which has an input and an output as well as a current-compensated choke and a capacitance network, wherein

- the choke has a plurality of phase windings (L1, L2, L3) on a common core,
- each phase winding is connected to one phase conductor (P1, P2, P3),
- the capacitance network has capacitors (C1, C2, C3, C4), each of which is connected between a phase conductor (P1, P2, P3) and a neutral conductor,

**characterized in that**
a further choke is provided in series with the neutral conductor (N) and is wound separately from the core.

**2.** Line filter according to Claim 1, in which a further capacitor (C4) is connected between the neutral conductor (N) and a reference earth.

**3.** Line filter according to Claim 1, in which the line filter (1) has a plurality of series-connected filter units (2, 2') of the same type.

**4.** Line filter according to Claim 3, in which the filter units (2, 2') have a common neutral conductor (N).

**5.** Line filter according to one of Claims 3 or 4, in which only one of the filter units (2) has an inductance (L4) which is separate from the main choke.

**6.** Line filter according to one of the preceding claims, in which circuit elements (C4, C5, C6) are connected to the phase conductors (P1, P2, P3) upstream of the filter unit (2).

**7.** Line filter according to Claim 6, in which the circuit elements (C4, C5, C6) are capacitors.

**8.** Line filter according to one of Claims 6 or 7, in which the neutral conductor (N) is connected to the upstream circuit elements.

**Revendications**

**1.** Filtre réseau (1) comprenant une unité de filtrage (2), laquelle présente une entrée et une sortie ainsi qu'une bobine compensée en courant et un réseau de capacités,

- la bobine présentant plusieurs enroulements de phase (L1, L2, L3) sur un noyau commun,
- chaque enroulement de phase étant branché dans un conducteur de phase (P1, P2, P3),
- le réseau de capacités présentant des condensateurs (C1, C2, C3, C4) qui sont respectivement branchés entre un conducteur de phase (P1, P2, P3) et un conducteur de neutre,

**caractérisé en ce que**

il est prévu une bobine supplémentaire en série avec le conducteur de neutre (N), laquelle est enroulée séparément du noyau.

2. Filtre réseau selon la revendication 1, dans lequel un condensateur supplémentaire (C4) est branché entre le conducteur de neutre (N) et une terre de référence.

3. Filtre réseau selon la revendication 1, dans lequel le filtre réseau (1) présente plusieurs unités de filtrage (2, 2') du même type branchées les unes derrière les autres.

4. Filtre réseau selon la revendication 3, dans lequel les unités de filtrage (2, 2') présentent un conducteur de neutre (N) commun.

5. Filtre réseau selon l'une des revendications 3 ou 4, dans lequel une seule des unités de filtrage (2) présente une inductance (L4) séparée de la bobine principale.

6. Filtre réseau selon l'une des revendications précédentes, dans lequel des éléments de circuit (C4, C5, C6) sont branchés aux conducteurs de phase (P1, P2, P3) en amont de l'unité de filtrage (2).

7. Filtre réseau selon la revendication 6, dans lequel les éléments de circuit (C4, C5, C6) sont des condensateurs.

8. Filtre réseau selon l'une des revendications 6 ou 7, dans lequel le conducteur de neutre (N) est relié avec les éléments de circuit branchés en amont.

FIG 1

FIG 2

FIG 3

FIG 4

EP 1 779 488 B1

FIG 5

EP 1 779 488 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1069673 A1